# EUROPEAN PATENT APPLICATION

(11) **EP 1 431 637 A1**
(43) Date of publication of application: **23.06.2004**
(21) Application number: 03079129.7
(22) Date of filing: 19.12.2003
(51) Int. Cl.: F16K 17/06

(54) **Safety shut-off valve**

(30) Priority: 19.12.2002 NL 1022212
(71) Applicant: Dienst Sociale Werkvoorziening Rijswijk en Omstreken, 2718 TC Zoetermeer (NL)
(72) Inventor: Den Ouden, Rombout Sylvester, 3833 WC Leusden (NL); Marcus, Dennis Ryan, 2547 AS Den Haag (NL)
(74) Representative: van Westenbrugge, Andries

(57) **Abstract**

Safety shut-off valve in which the valve body (1) opens the connection between the inlet part (3) and outlet part (4), counter to the action of a spring (10), in the event of an excess pressure. The pretension of the spring (10) is fixed on one side and adjustable on the other side. The fixed pretension is obtained by a cup (14) which bears the spring (10) being fixed in a predetermined preferred position by screwing and snap action. A different pretensioning of the spring (10) is possible starting from this position, depending on the desired properties.

## Description

The present invention relates to a safety shut-off valve, comprising a valve housing provided with an inlet part and an outlet part, between which a spring-loaded valve member is arranged, which valve member can move in translation along an axis, said spring being supported on a support arranged in the valve body and comprising a support body, which is fixedly connected to the said valve housing, and a support cup provided with a bearing surface for bearing the said spring, wherein the said support cup can be fixed in a number of different positions with respect to said support body, as seen in the direction of the said axis.

A safety shut-off valve of this type is known from FR-A2575264. Therein the spring is supported by a hollow nut which can be screwed adjustably onto a sleeve. A further safety shut-off valve is known from EP00201 812.5A in the name of DSW Rijswijk. Valves of this type are used as safety features for all kinds of appliances and pipe systems. Different demands are imposed on the working pressure of the safety shut-off valve, i.e. the pressure at which the latter begins to open, depending on the particular application. Of course, the shut-off valve should be active within a very narrow range, i.e. needs to be accurately calibrated, so that the initial opening on the one hand does not occur at an excessively low pressure and on the other hand does not occur when the pressure is too high.

In the European application EP 00201812.5A described above, it is proposed to compensate for the tolerances which occur in both the dimensions of the various components and (significant) variations in the pretension of the springs used which is generated under a defined compression. For this purpose, it is proposed to make the position of the spring housing comprising a support for the spring slightly displaceable during production with respect to the housing of the safety valve in which the valve member presses in a sealing manner against a valve seat.

This solution is quite satisfactory for coping with tolerances. However, producers of different types of appliances impose different demands on the opening pressure of safety shut-off valves and these variations may lie outside the range of tolerances for which the solution described in EP 00201812.5A is intended. Therefore, it is an object of the present invention to provide a safety shut-off valve which allows such variation in the pretension produced by the spring to be controlled but which on the other hand does not require different components for each application. Moreover, it should be relatively easy to adjust at least the working pressure.

This object is achieved in a device as described above, by virtue of the fact that one of these positions comprises a preferred position, said support cup being fixed in a position which is defined by particular properties of the support body. In the present context, the term particular properties is to be understood as meaning snap action, end stops and the like.

Other examples include toothed arrangements, markings (parts lying opposite one another) or force feedback. More particularly a preferred position of this nature comprises the minimum pressure for which the safety shut-off valve is designed. Starting from this preferred position, during assembly the pretension of the spring which presses on the valve member can be increased further in order to provide a higher operating pressure. Of course, it is also possible to arrive at this preferred position (again) at a later stage.

According to an advantageous embodiment of the invention, the support body is provided with a sleeve-like part with an internal screw thread, and the support cup is provided with an external screw thread for interacting with the said internal screw thread, and the support body and support cup are provided with interacting snap-action means which define said preferred position of the said support cup with respect to said support body. In this variant embodiment of the invention, the spring is adjusted with the screw thread means. After the adjustment operation has ended, the positions can be locked, or according to an advantageous embodiment the spring cup has a self-locking action with respect to the support body. Snap-action means are present in order to fix the preferred position. This can be implemented by a simple click-fit action. Snap-action means of this type may comprise a resilient tongue arranged on the support cup and a rim arranged on the support body, with which this resilient tongue can engage.

According to a further variant of the invention, the snap-action means described above define the lowest pressure which can be set. During assembly, a higher operating pressure can be defined starting from this lowest settable pressure by means of screwing action.

To enable the safety shut-off valve described above to be tested, the support is provided, at the end remote from the valve body, with projections which extend in the direction of the axis for interacting with cams arranged on a rotatable rotor which is connected to said valve member.

The invention will be explained in more detail below with reference to an exemplary embodiment illustrated in the drawing, in which:
Fig. 1 diagrammatically depicts a cross section through the safety shut-off valve according to the invention; and
Fig. 2 shows a perspective view of the various components of the safety shut-off valve in an exploded state.

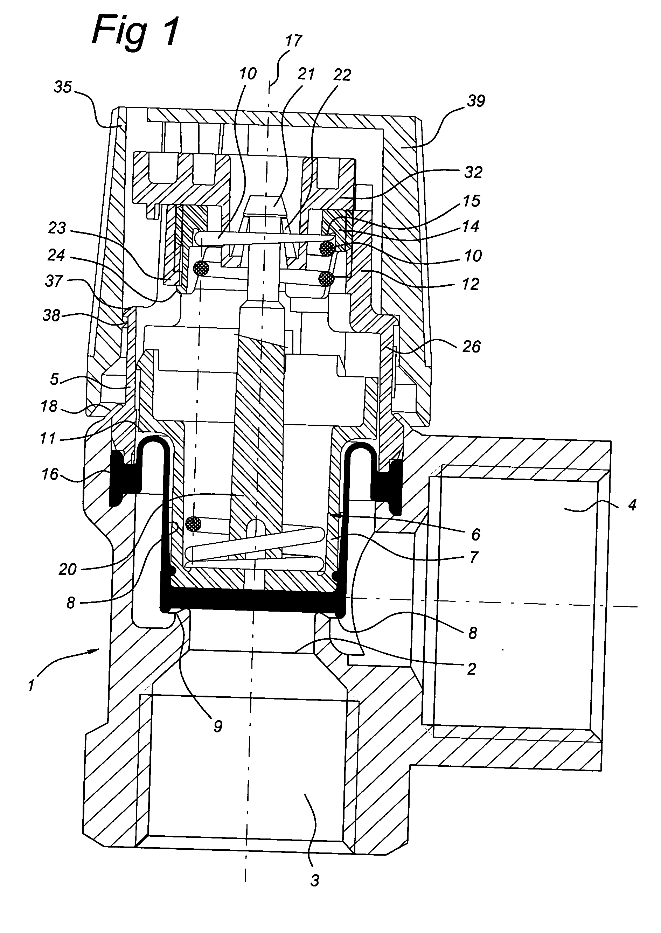

In Fig. 1, 1 denotes the housing of the safety valve, which has a passage 2, the passage being provided with an entry part 3 and an exit part 4. The entry part 3 and exit part 4 offer connection features, in the usual way, for the pipes which are to be connected thereto, which may be by screw thread or alternatively, for example, by means of pinch fittings, click-action connections and the like.

The housing 1 accommodates a valve holder 5 which guides the valve member 6 enclosed therein. The valve member 6 has a first cylindrical part 7, which is directly adjoined by a significant part of diaphragm 8 and the underside of which is held on a valve seat 9. The valve member 6 is held on the valve seat by a compression spring 10 arranged between the valve member 6 and the spring housing or support 12, the points of engagement on valve member and valve holder, respectively, being located as far away from one another as possible within the dimensions of the safety valve.

The diaphragm 8 bears directly against the underside and sides of the first cylindrical part 7, then, at the transition from the first cylindrical part 7 to the second cylindrical part, located above it, of the valve member 6, against the shoulder 11 which is formed there, and then against the inner side of the valve holder 5 where the diaphragm merges into a rim part 16.

The rim part is composed of a ring 16. There are profiles for receiving the ring 16 in a clamping manner formed in the housing 1 and spring housing 12.

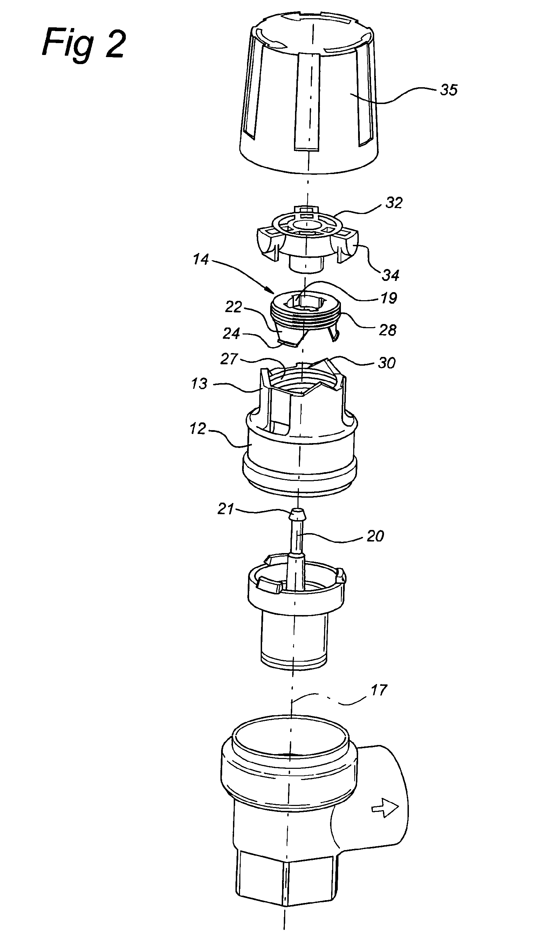

At the top side (as seen in the figures), spring 10 is supported on a setscrew 14, and more particularly the support surface 15 thereof. Setscrew 14 is provided with an external screw thread 28 (Fig. 2) which corresponds to the internal screwthread 27 of sleeve-like part 13, which forms the top side of the spring housing 12. Recesses 19 are present in setscrew 14 for driving it in rotation with the aid of special tool. Moreover, setscrew 14 is provided with a number of spring lips 22 which are provided with thickened portions 24 in the vicinity of their ends. These thickened portions are designed to engage behind projecting rim 23 (Fig. 1) of spring housing 12.

Inside the spring 10 there is a pin 20 which is connected to the valve member 6 and is provided, in the vicinity of the free end, with a mushroom-shaped head 21 which can snap into place along lips 22 of a rotor 32. In the process, a rotatable connection is formed between pin 20 and rotor 32.

Sleeve-like part 13 is provided with cams 30 which extend in the direction of the longitudinal axis 17 of the shut-off valve. Rotor 32 is provided with cams 34 which can move over the cams 30. 35 denotes an external rotary button which is provided with drivers 39 which can impart a rotational movement to the rotor. Rotor 32 can move in the direction of axis 17 with respect to this rotary button 35. Rotary button 35 is provided with a rim or a number of cams 38 which snap in behind projections or rim 37 of the spring housing or support 12. Measures which are not mentioned in detail are taken to fix the position of the valve member 6 with respect to the spring housing in the direction of rotation but to allow translational movement in the direction of axis 17.

Rotating the button 35 drives rotor 32, causing cams 34 to move over cams 30, i.e. rotor 32 moves upwards (as seen in the drawings) and displaces head 21 of pin 20 with it, with the result that valve member 6 is moved away from seat 9, counter to the pressure of spring 10. In this way, it is possible to test whether the safety shut-off valve is still working.

There are two situations for adjusting the operating pressure of the safety shut-off valve.

In the most common situation, it is not necessary to adjust the spring pretension. After partial assembly, setscrew 14 is rotated in spring housing 12 until the thickened portion 24 of the resilient tongues 22 snaps in behind rim 23. This snap-action movement is clearly perceptible both for the person carrying out assembly and to a robot which may be used. According to the present invention, the minimum setting value of the shut-off valve is obtained at that moment. The various components can be produced sufficiently accurately by injection moulding for this minimum pressure to lie within the different requirements set.

If the purchasers require higher safety pressures, setscrew 14 is rotated further during assembly, with the result that spring 10 is pretensioned further. Since screw thread 27/28 has a self-locking action, it is not necessary, after setting, to take further measures to fix the setscrew 14 and spring housing 12 with respect to one another. The setscrew 14 is rotated by a tool which engages in the recesses 19.

After the desired operating pressure has been set, rotary button 35 is fitted, and after projection 38 has snapped behind rim 37 in the manner described above, it cannot easily be removed, which ensures that it is impossible for unauthorized people to alter the preset pretension of spring 10.

It will be understood that the above text merely represents one preferred embodiment of the present invention. It is possible for the support cup for the spring which is designed as a setscrew in the example to be designed in other ways and to be implemented such that it can be fixed in a specific number of positions. These and further variants will be readily apparent to the person skilled in the art and lie within the scope of the appended claims.

## Claims

1. Safety shut-off valve, comprising a valve housing (1) provided with an inlet part (3) and an outlet part (4), between which a spring (10)-loaded valve member (6) is arranged, which valve member (6) can move in translation along an axis (17), said spring (10) being supported on a support arranged in the valve body (1) and comprising a support body (12) , which is fixedly connected to the said valve housing, and a support cup (14) provided with a support surface (15) for support the said spring (10), it being possible for the said support cup to be fixed in a number of different positions with respect to said support body, as seen in the direction of the said axis (17), **characterized in that** one of these positions comprises a preferred position, said support cup being fixed in a position which is defined by particular properties of the support body.

2. Shut-off valve according to Claim 1, in which, after the said support cup has been arranged in said preferred position, it can be moved to and fixed in a further position which tensions the spring (10) to a greater or lesser extent.

3. Shut-off valve according to one of the preceding claims, in which said support body (12) is provided with a sleeve-like part (13) with an internal screw thread (27), and the support cup (14) is provided with an external screw thread (28) for interacting with said internal screw thread, and in that the support body and support cup are provided with interacting snap-action means which define the said preferred position of the said support cup with respect to the said support body.

4. Shut-off valve according to Claim 3, in which said snap-action means comprise a resilient tongue (22) arranged on the support cup (14) and a rim (23), which is arranged on the support body (12) and with which the said resilient tongue can engage.

5. Shut-off valve according to Claim 4, in which said resilient tongue (22) is provided with a thickened portion (24) for engaging behind the said rim.

6. Shut-off valve according to one of Claims 3-5, in which the said snap-action means are arranged in such a manner that the set pressure of the safety shut-off valve at the snap action is the minimum settable pressure of said safety shut-off valve.

7. Safety shut-off valve according to one of the preceding claims, in which said support is provided with an extension (26) for guiding the said valve member, which extension is connected to said valve housing.

8. Safety shut-off valve according to one of the preceding claims, in which a sealing diaphragm (8) is arranged between said valve housing (1) and said valve member.

9. Shut-off valve according to one of the preceding claims, in which said support is provided, at the end remote from the valve body, with projections (30) which extend in the direction of the axis (17) and are designed to interact with cams (34) arranged on a rotatable rotor (32) which is connected to the said valve member (6).
